# EUROPEAN PATENT APPLICATION

(11) **EP 3 324 522 A1**
(43) Date of publication of application: **23.05.2018**
(21) Application number: 16811712.5
(22) Date of filing: 16.06.2016
(51) Int. Cl.: H02K 9/19, H02K 1/27, H02K 1/32

(54) **ELECTRIC MOTOR**

(30) Priority: 17.06.2015 JP 2015122194
(71) Applicant: Valeo Japan Co., Ltd., Saitama 360-0193 (JP)
(72) Inventor: DEGUCHI, Hironobu, Kumagaya-shi Saitama 360-0193 (JP)
(74) Representative: Tran, Chi-Hai
(86) International application number: PCT/JP2016/067961
(87) International publication number: WO 2016/204238

(57) **Abstract**

To provide a electric motor capable of cooling permanent magnets effectively and not impairing strength of a rotor without reducing magnet surface areas of the permanent magnets as well as without newly forming through holes through which cooling fluid flows in the rotor. In a case where a rotor 4 rotatably arranged inside a stator 3 in a radial direction through a given gap is configured to include a magnet body 6 fixed to a rotating shaft 5, a plurality of magnet insertion holes 7 radially provided from the rotating shaft's side of the magnet body 6, permanent magnets 10 arranged in the magnetic insertion holes 7 and end plates 11 and 12 attached so as to cover the magnet insertion holes 7 on both ends of the magnetic body 6 in an axial direction, each magnetic insertion hole 7 is provided with a cooling fluid passage formed by radial-direction fluid passages 15, 16 provided to extend between the end plates 11, 12 and ends of the permanent magnet 10 in the axial direction and an axial-direction fluid passage 17 formed on a bottom portion of the magnet insertion hole 7 so as to connect these radial-direction fluid passages 15, 16 in the axial direction of the magnetic body 6.

## Description

### Technical Field

The present invention relates to a electric motor having a structure useful for cooling a rotor securely fitted to a rerating shaft and rotating together with the rotating shaft, in which many permanent magnets are arranged in a circumferential direction, and particularly for cooling the permanent magnets in the rotor.

### Background Art

As the rotor of a permanent magnet electric motor receives magnetic flux from a stator, iron loss (eddy current loss) due to leakage flux occurs, which causes heat generation.

The temperature of the rotor due to the heat generation is the highest in the vicinity of an air gap in a short distance with respect to coils of the stator and is gradually reduced as going in a central direction of the rotating shaft. Therefore, when the permanent magnets are, for example, magnets of I-shaped arrangement buried in a radial direction of the stator, the magnets are exposed in an environment in which temperature is gradually increased from the rotating shaft toward the outside in the radial direction.

In a case where sintered products such as ferrite or neodymium alloy magnets are used as permanent magnets under the above environment, an internal stress is generated due to a difference in thermal expansion caused by a temperature difference, therefore, the magnets are easily broken. As ferrite (approximately 15×10^-6k⁻¹) has a higher thermal expansion coefficient than that of the neodymium alloy (approximately 6.5×^6k⁻¹), it is necessary to reduce a length of the magnet in a radial direction for preventing breakage due to thermal expansion, however, it is difficult to secure the magnet surface area when suppressing the length in the radial direction.

Accordingly, it is desirable to positively cool the rotor (permanent magnets), and a structure in which permanent magnets and a coil end part are cooled by a refrigerant supplied from a rotor shaft in the rotor rotatably supported inside a stator having the coil end part in the radial direction and provided with the permanent magnets is disclosed in related art. Specifically, a structure provided with a refrigerant return path through which the refrigerant that has cooled the permanent magnets circulates inward in the radial direction in the rotor and a coolant jet nozzle jetting the refrigerant from the rotor toward the coil end part which is communicates with an inside end in the radial direction of the refrigerant return path and provided at a position close to the rotor shaft in the radial direction is well known, in which the coil end part is cooled by the refrigerant which has cooled the permanent magnets (refer to Patent Literature 1).

Moreover, a structure in which a rotor core (magnetic body) which forms a rotor is provided with through holes piercing the rotor core in an axial direction of a electric motor is also well known, in which these through holes are twisted with respect to the axial direction of the electric motor, and air or a refrigerant is allowed to flow backward into the through holes with rotation of the rotor core to thereby increase cooling efficiency (refer to Patent Literature 2).

### Citation List

### Patent Literature

Patent Literature 1: JP-A 2010-239799
Patent Literature 2: JP-A 2001-25209

### Summary of Invention

### Technical Problem

However, it is necessary to drill through holes (refrigerant paths inside the core) or the like through which cooling fluid flows in the magnetic body (rotor core) of the rotor separately from magnet insertion holes or insertion holes for rivets that fix the magnetic body and end plates in the axial direction in both of the above structures, complicated processing is required. As it is necessary to form the through holes (refrigerant paths inside the core) through which cooling fluid flows separately from the magnet insertion holes or insertion holes for rivets, there is a risk that strength itself of the rotor may be reduced.

The present invention has been made in view of above circumstances, and an object thereof is to provide a electric motor capable of cooling permanent magnets effectively and not impairing the strength of the rotor without reducing the magnet surface area of the permanent magnets as well as without newly forming through holes through which cooling fluid flows in the rotor.

### Solution to Problem

In order to solve the above problems, a electric motor according to the present invention includes a stator around which an armature winding is wound and a rotor rotatably arranged inside the stator in a radial direction through a given gap, in which a plurality of permanent magnets are arranged in a circumferential direction, in which the rotor is configured to include a magnetic body fixed to a rotating shaft, a plurality of magnet insertion holes radially provided from the rotating shaft's side of the magnetic body, the permanent magnets arranged in the magnetic insertion holes and end plates attached so as to cover the magnet insertion holes on both ends of the magnetic body in an axial direction, and each magnetic insertion hole is provided with a cooling fluid passage formed by a pair of radial-direction fluid passages provided to extend from an outer periphery of the magnetic body to the inside in the radial direction between both ends of the permanent magnet in the axial direction and respective end plates, and an axial-direction fluid passage formed on a bottom portion of the magnet insertion hole so as to connect the pair of radial-direction fluid passages in the axial direction of the magnetic body.

Accordingly, in each magnetic insertion hole, cooling fluid flows in the cooling fluid passage formed by a pair of radial-direction fluid passages formed between the permanent magnet in each magnet insertion hole and the end plates and the axial-direction fluid passage formed on the bottom portion of the magnet insertion hole so as to connect the pair of radial-direction fluid passages, therefore, cooling fluid is allowed to contact side edges inserted into the magnet insertion hole of the permanent magnet and not seen from the surface (side edges on both ends in the axial direction and a side edge facing the bottom portion of the magnet insertion hole), as a result, cooling of the permanent magnets is promoted and unevenness in temperature distribution of the permanent magnets is improved.

Here, it is preferable that the pair of radial-direction fluid passages are formed so that a passage width in one radial-direction fluid passage in the axial direction of the magnetic body and a passage width in the other radial-direction fluid passage in the axial direction of the magnetic body are different from each other.

When the above structure is adopted, fluid inside the radial-direction fluid passages having a relatively wide passage width in the axial direction of the magnet body is easily discharged from the radial-direction fluid passages by a centrifugal force generated by rotation of the rotor. The cooling fluid is introduced from the radial-direction fluid passages having a relatively narrow passage width in the axial direction of the magnetic body and is discharged to the outside of the rotor via the axial-direction fluid passages through the radial-direction fluid passages having the relatively wide passage width in the axial direction of the magnet body, therefore, the flow of the cooling fluid inside the rotor is promoted as well as cooling of the rotor (permanent magnets) is promoted, which improve unevenness in temperature distribution of the rotor (permanent magnets).

In particular, the pairs of radial-direction fluid passages may be formed so that radial-direction fluid passages having the relatively wide passage width in the axial direction of the magnetic body are formed on the same side in the axial direction of the magnetic body in adjacent magnetic insertion holes. In this case, a large flow of the cooling fluid flowing from one side to the other side in the axial direction in the entire circumference of the rotor is formed when the entire rotor is seen, which promotes circulation of the cooling fluid inside the electric motor.

Moreover, the pairs of radial-direction fluid passages may be formed so that radial-direction fluid passages having the relatively wide passage width in the axial direction of the magnetic body are formed on different sides in the axial direction of the magnetic body in adjacent magnetic insertion holes. In this case, flows of the cooling fluid flowing in the magnet insertion holes (flowing around the permanent magnets) can be reversed alternately in the circumferential direction and cooling in the rotor (permanent magnets) is not deviated, which improves unevenness in temperature distribution of the rotor (permanent magnets).

Note that outer sides of the magnetic insertion holes in the radial direction may open to the outer periphery of the magnetic body, open ends on outer sides of the magnet insertion holes in the radial direction may be blocked by coming-off preventing lid members, and plate-shaped springs biasing the permanent magnets to the outer side in the radial direction may be arranged in the axial-direction fluid passages.

In the above structure, it is possible to push the permanent magnets to the coming-off preventing lid members by the plate-shaped springs to thereby allow the permanent magnets to be securely held in the magnet insertion holes as well as the plate-shaped springs arranged inside the axial-direction fluid passages can be functioned as fins for heat exchange, therefore, the fluid flowing in the axial-direction fluid passages is easily heat-exchanged by the plate-shaped springs to thereby promote cooling of the rotor (permanent magnets). Advantageous Effects of Invention

As described above, according to the present invention, a pair of radial-direction fluid passages are formed between both ends of the permanent magnet in the axial direction and the end plates in the magnet insertion hole formed in the magnetic body of the rotor, and the axial-direction fluid passage connecting the radial-direction fluid passages formed on both ends of the permanent magnet in the axial direction of the magnetic body is formed on the bottom portion of the magnet insertion hole, furthermore, cooling fluid is allowed to contact side edges inserted into the magnet insertion hole of the permanent magnet and not seen from the surface (side edges on both ends in the axial direction and a side edge facing the bottom portion of the magnet insertion hole) . Accordingly, the entire permanent magnets can be cooled and cooling of the permanent magnets is promoted, which improves unevenness in temperature distribution of the permanent magnets. Therefore, breakage due to thermal stress can be prevented even when the permanent magnets are long in the radial direction, as a result, the magnet surface area can be largely secured.

When the above cooling fluid passages are formed, the pair of radial-direction fluid passages formed on both ends of the permanent magnet in the axial direction are formed so that the passage width in one radial-direction fluid passage in the axial direction of the magnetic body and the passage width in the other radial-direction fluid passage in the axial direction of the magnetic body are different from each other, thereby promoting the flow of cooling fluid inside the rotor and promoting cooling of the rotor, which can improve unevenness in temperature distribution of the rotor (permanent magnets).

In particularly, when the pairs of radial-direction fluid passages are formed so that radial-direction fluid passages having the relatively wide passage width in the axial direction of the magnetic body are formed on the same side in the axial direction of the magnetic body in adjacent magnetic insertion holes, the large flow of the cooling fluid flowing in the same direction from one side to the other side in the axial direction in the entire circumference of the rotor is formed inside the electric motor, which promotes smooth convection of the cooling fluid inside the electric motor.

Moreover, when the pairs of radial-direction fluid passages are formed so that radial-direction fluid passages having the relatively wide passage width in the axial direction of the magnetic body are formed on different sides in the axial direction of the magnetic body in adjacent magnetic insertion holes, the flows of the cooling fluid in the axial direction of the magnetic body can be reversed alternately in the circumferential direction and cooling of the rotor (permanent magnets) is not deviated, which can improve unevenness in temperature distribution of the rotor (permanent magnets).

Furthermore, when the outer sides of the magnetic insertion holes in the radial direction open to the outer periphery of the magnetic body, the open ends on outer sides of the magnet insertion holes in the radial direction are blocked by coming-off preventing lid members, and plate-shaped springs biasing the permanent magnets to the outer side in the radial direction are arranged in the axial-direction fluid passages, thereby allowing the permanent magnets to be securely held in the magnet insertion holes by the plate-shaped springs and allowing fluid flowing in the axial-direction flowing passages to be easily heat-exchanged by the plate-shaped springs, which can further promote cooling of the rotor (permanent magnets).

### Brief Description of Drawings

[Fig. 1] Fig. 1 is a cross-sectional view showing an example of a rotor of a electric motor according to the present invention, which is seen from an axial direction.
[Fig. 2(a)] Fig. 2(a) is a cross-sectional view taken along A-A line of Fig. 1.
[Fig. 2(b)] Fig. 2(b) is a cross-sectional view taken along B-B line of Fig. 1.
[Fig. 3(a)] Fig. 3(a) is a view showing another structure example of the rotor of the electric motor according to the present invention, and a cross-sectional view taken along B-B line of Fig. 3(b).
[Fig. 3(b)] Fig. 3(b) is a view showing another structure example of the rotor of the electric motor according to the present invention, and a view of the rotor seen from the axial direction, which is an end view seen from C-C line of Fig. 3 (a) .
[Fig. 4(a)] Fig. 4(a) is a view showing further another structure of the rotor in the electric motor according to the present invention, and a cross-sectional view taken along B-B line of Fig. 4(b).
[Fig. 4(b)] Fig. 4(b) is a view showing further another structure of the rotor in the electric motor according to the present invention, and a view of the rotor seen from the axial direction, which is an end view seen from C-C line of Fig. 4 (a) . Description of Embodiments

Hereinafter, a electric motor according to an embodiment of the present invention will be explained with reference to the attached drawings.

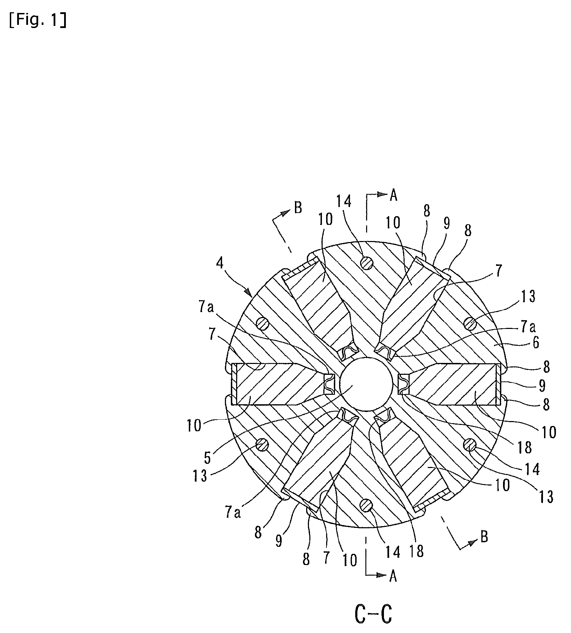

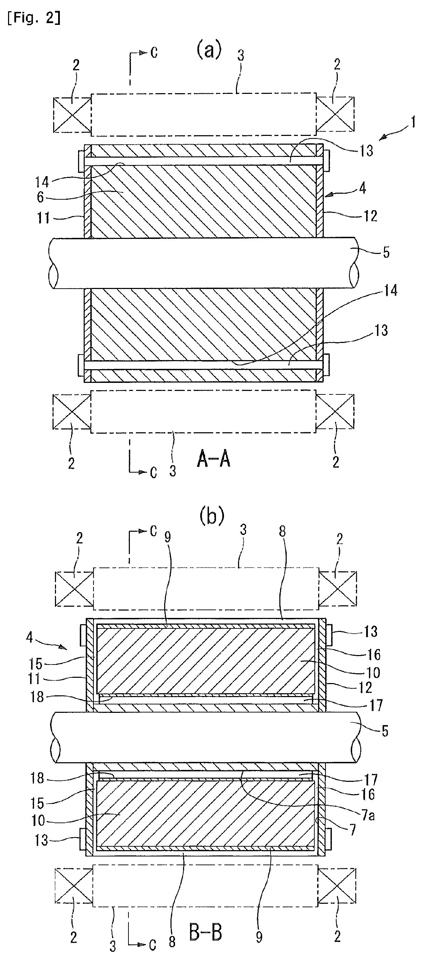

In Fig. 1, Fig. 2(a) and Fig. 2(b), a electric motor 1 is configured to include a stator 3 having a coil end part 2 around which an armature winding is wound and a rotor 4 supported by a rotating shaft 5 inside the stator 3 in a radial direction and rotatably arranged with the rotating shaft 5 through a given gap.

The rotor 4 includes a magnetic body 6 formed in a columnar shape by stacking a large number of magnetic steel plates and securely fitted to the rotating shaft 5 so that a shaft center corresponds to the rotating shaft 5, in which plural (six in this case) magnet insertion holes 7 radially provided from the rotating shaft' s side are formed in the magnetic body 6 at equal intervals in a circumferential direction. The magnet insertion holes 7 are linearly (I-shape in cross section) formed from the vicinity of the rotating shaft 5 to an outer peripheral surface of the magnetic body 6, in which spring housing concave portions 7a housing later-described plate-shaped springs 18 are formed at places closest to the rotating shaft (on bottom portions of the magnet insertion holes 7). The magnet insertion holes 7 are formed from the spring housing concave portions 7a toward the outer side in the radial direction. In this example, each magnet insertion hole 7 extends in a tapered manner as going from the spring housing concave portion 7a toward the outer side in the radial direction to be formed in a cross-sectional shape in which a width from an intermediate part in a peripheral direction is uniform.

In an open end of the magnet insertion hole 7, a hook-shaped flanged projection 8 projecting to the inner side of the magnet insertion hole 7 in the circumferential direction is formed, and a plate-shaped coming-off preventing lid member 9 abuts on the flanged projection 8 from the inside of the magnet insertion hole 7. The permanent magnet 10 is a block shaped one in which a tapered surface is formed in the inner side in the radial direction so as to correspond to the cross-sectional shape of the magnet insertion hole other than the spring housing concave portion 7a, which is arranged in an inner side of the coming-off preventing lid member 9 provided in the magnet insertion hole 7 in the radial direction. An outer peripheral end of the permanent magnet 10 abuts on the coming-off preventing lid member 9 to thereby restrict movement to the outside in the radial direction by the coming-off preventing lid member 9, which is held so as not to come off from the magnet insertion hole 7.

The coming-off preventing lid member 9 is formed so that a length in the circumferential direction (length in a short-length direction) is approximately equal to a width in the circumferential direction of the magnet insertion hole in the inner side of the flanged projection 8 in the radial direction (width of the permanent magnet 10 in the circumferential direction) and so that a length in the axial direction is approximately equal to a length of the permanent magnet 10 in the same direction.

Additionally, lengths of the permanent magnet 10 and the coming-off preventing lid member 9 in the axial direction are formed to be shorter than a length of the magnet insertion hole 7 in the axial direction, so that the permanent magnet 10 is fixed to the magnet insertion hole so as not to protrude from an end surface of the magnetic body 6 in the axial direction.

Disc-shaped end plates 11 and 12 abut on both ends of the magnetic body 6 in the axial direction so as to cover the magnet insertion hole 7 in the axial direction, and the end plates 11 and 12 are integrated with the magnetic body 6 in the axial direction by fixing means such as rivets 13 with a not-shown balance weight provided according to need. Note that "14" denotes rivet insertion holes formed between the magnet insertion holes adjacent in the circumferential direction and provided to extend in the axial direction of the magnetic body 6.

Then, in each magnet insertion hole 7, a cooling fluid passage formed by a pair of radial-direction fluid passages 15 and 16 provided to extend from an outer periphery of the magnetic body 6 to the inside in the radial direction between respective end plates 11, 12 and ends of the permanent magnet 10 in the axial direction, and an axial-direction fluid passage 17 provided to connect the pair of radial-direction fluid passages formed in both ends of the permanent magnet in the axial direction of the magnetic body 6 is formed.

The radial-direction fluid passages 15 and 16 are formed by intentionally forming a gap between the ends of the permanent magnet 10 in the axial direction and the end plates 11 and 12 abutting on the end surfaces of the magnetic body 6 in the axial direction, and respective radial-direction fluid passages 15 and 16 formed in both ends of the magnet insertion hole 7 in the axial direction may be formed so that widths in the axial direction are the same as well as so that widths are different (Fig. 2(b) shows an example in which widths of the radial-direction fluid passages 15 and 16 in the axial direction are the same). In this case, the coming-off preventing lid member 9 is attached so as not to be deviated from the position of the permanent magnet 10 in the axial direction and so as not to block the radial-direction fluid passages 15 and 16 (so that widths between the pair of end plates 11, 12 and the permanent magnet 10 in the axial direction are not changed according to the attachment position of the coming-off preventing lid member 9).

The axial-direction fluid passage 17 is formed by the spring housing concave portion 7a formed in the bottom portion of the magnet insertion hole 7, in which the plate-shaped spring 18 that biases the permanent magnet 10 to the outer side in the radial direction is arranged over the entire length in the axial direction. The plate-shaped spring 18 is, for example, formed in a U-shape in cross section to be housed in the axial-direction fluid passage so as to be elastically deformed to thereby bias the permanent magnet 10 so as to be constantly pushed to the coming-off preventing lid member 9.

In the above structure, the rotor 4 is provided with the cooling fluid passage in each magnet insertion hole 7, in which cooling fluid directly contacts the total three surfaces including two surfaces of the permanent magnet 10 facing the end plates 11, 12 and an end surface in the inside of the radial direction by the radial-direction fluid passages 15 and 16 formed between the permanent magnet 10 and the end plates 11, 12 and the axial-direction fluid passage 17 formed in the bottom portion of the magnet insertion hole 7, therefore, it is possible to cool the permanent magnets 10 to the inside thereof, which improves unevenness in temperature distribution of the permanent magnets 10.

Therefore, even when the sintered products such as ferrite or neodymium alloy magnets are used as permanent magnets 10, the inconvenience that the internal stress is generated due to the difference in thermal expansion caused by the temperature difference and thus the magnets are easily broken is eliminated, and it is not necessary to reduce the length of the permanent magnets 10 in the radial direction for preventing breakage due to thermal stress and the magnet surface area can be easily secured.

In the above example, the example in which the widths of the radial-direction fluid passages 15 and 16 in the axial direction of the magnetic body 6, which are provided on both sides of the rotor 4 in the axial direction, are formed to be equal has been shown, however, it is also possible to make a passage width in one radial-direction fluid passage in the axial direction of the magnetic body 6 and a passage width in the other radial-direction fluid passage in the axial direction of the magnetic body 6 different from each other in the radial-direction fluid passages 15 and 16 formed on both ends of the permanent magnet 10 in the axial direction.

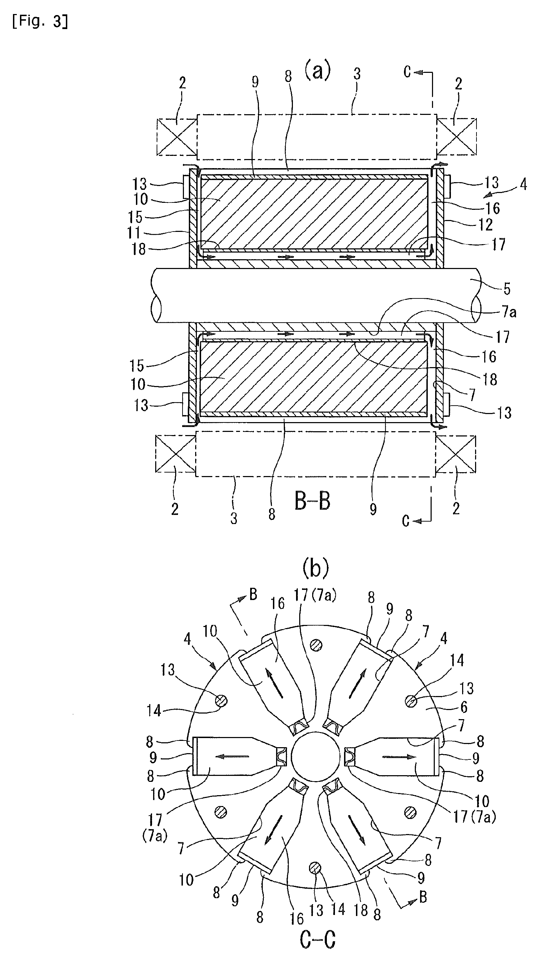

Fig. 3 (a) shows an example in which the radial-direction fluid passages 15 and 16 formed in both ends of the permanent magnets 10 in the axial direction are formed so that radial-direction fluid passages 16 having a relatively wide passage width in the axial direction of the magnetic body 6 are formed on the same side in the axial direction of the magnetic body 6 inside the magnetic insertion holes 7 adjacent in the circumferential direction.

As fluid inside the radial-direction fluid passages 16 having the relatively wide passage width in the axial direction of the magnetic body 6 is easily discharged from the radial-direction fluid passages 16 by a centrifugal force generated by rotation of the rotor 4 in the example, cooling fluid is introduced from radial-direction fluid passages 15 having a relatively narrow passage width in the axial direction of the magnetic body 6 and flows through the radial-direction fluid passages 15 from the outer side to the inner side in the radial direction, then, flows through the axial-direction fluid passage 17 in the bottom of the magnet insertion hole 7. After that, the cooling fluid flows through the radial-direction fluid passages 16 having the relatively wide passage width in the axial direction of the magnetic body 6 from the inner side to the outer side in the radial direction as shown in Fig. 3 (b) and discharged to the outside of the rotor, therefore, the flow of the cooling fluid inside the rotor is promoted and unevenness in temperature distribution in the rotor 4 (permanent magnets 10) can be improved.

In particular, the radial-direction fluid passages 16 having the relatively wide passage width in the axial direction of the magnetic body 6 are formed on the same side of the magnetic body 6 in the axial direction in this example, therefore, a large flow of the cooling fluid flowing in the same direction from one side to the other side in the axial direction in the entire circumference of the rotor 4 is formed inside the electric motor, which promotes circulation of the cooling fluid inside the electric motor.

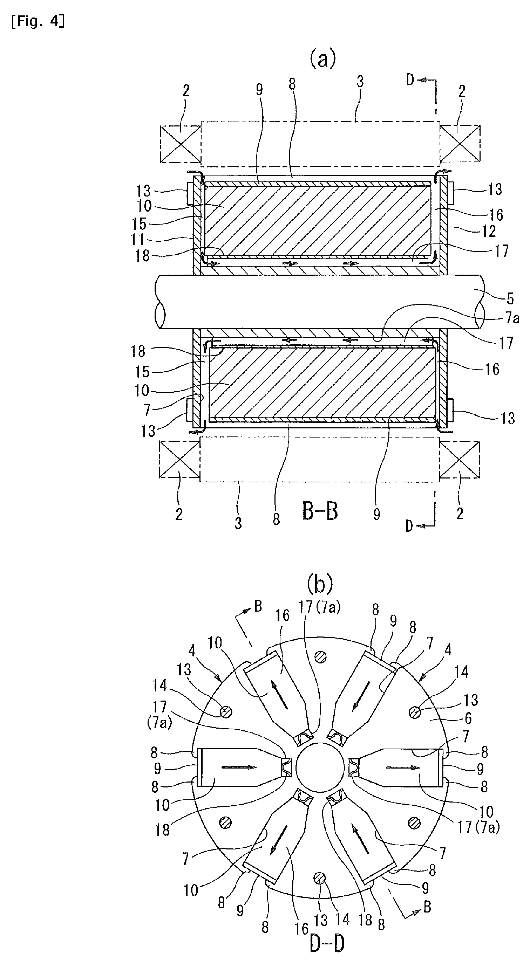

Fig. 4 (b) shows an example in which the radial-direction fluid passages 15 and 16 formed in both ends of the permanent magnets 10 in the axial direction are formed so that radial-direction fluid passages having the relatively wide passage width in the axial direction of the magnetic body 6 are formed on different sides in the axial direction of the magnetic body 6 inside the magnetic insertion holes 7 adjacent in the circumferential direction.

As the radial-direction fluid passages having the relatively wide passage width in the axial direction of the magnetic body 6 are formed on the different sides in the axial direction of the magnetic body 6 in the magnet insertion holes 7 adjacent in the circumferential direction, flows of the cooling fluid flowing in the magnet insertion holes 7 (flowing around the permanent magnets 10) can be reversed alternately in the circumferential direction as shown in Fig. 4(b), therefore, cooling of the rotor 4 (permanent magnets 10) is not deviated and unevenness in temperature distribution of the rotor 4 (permanent magnets 10) is improved. Reference Signs List

2 coil end part
3 stator
4 rotor
6 magnetic body
7 magnet insertion hole
9 coming-off preventing lid member
10 permanent magnet
11, 12 end plate
15, 16 radial-direction flow passage
17 axial-direction flow passage
18 plate-shaped spring

## Claims

1. A electric motor comprising:
a stator around which an armature winding is wound; and
a rotor rotatably arranged inside the stator in a radial direction through a given gap, in which a plurality of permanent magnets are arranged in a circumferential direction,
wherein the rotor is configured to include a magnetic body fixed to a rotating shaft, a plurality of magnet insertion holes radially provided from the rotating shaft's side of the magnetic body, the permanent magnets arranged in the magnetic insertion holes and end plates attached so as to cover the magnet insertion holes on both ends of the magnetic body in an axial direction, and
each magnetic insertion hole is provided with a cooling fluid passage formed by a pair of radial-direction fluid passages provided to extend from an outer periphery of the magnetic body to the inside in the radial direction between both ends of the permanent magnet in the axial direction and respective end plates, and an axial-direction fluid passage formed on a bottom portion of the magnet insertion hole so as to connect the pair of radial-direction fluid passages in the axial direction of the magnetic body.

2. The electric motor according to claim 1,
wherein the pair of radial-direction fluid passages are formed so that a passage width in one radial-direction fluid passage in the axial direction of the magnetic body and a passage width in the other radial-direction fluid passage in the axial direction of the magnetic body are different from each other.

3. The electric motor according to claim 2,
wherein the pairs of radial-direction fluid passages are formed so that radial-direction fluid passages having a relatively wide passage width in the axial direction of the magnetic body are formed on the same side in the axial direction of the magnetic body in adjacent magnetic insertion holes.

4. The electric motor according to claim 2,
wherein the pairs of radial-direction fluid passages are formed so that radial-direction fluid passages having a relatively wide passage width in the axial direction of the magnetic body are formed on different sides in the axial direction of the magnetic body in adjacent magnetic insertion holes.

5. The electric motor according to any one of claims 1 to 4,
wherein outer sides of the magnetic insertion holes in the radial direction open to the outer periphery of the magnetic body, open ends on outer sides of the magnet insertion holes in the radial direction are blocked by coming-off preventing lid members of the permanent magnets, and plate-shaped springs biasing the permanent magnets to the outer side in the radial direction are arranged in the axial-direction fluid passages.
